# EUROPEAN PATENT APPLICATION

(11) **EP 3 673 772 A1**
(43) Date of publication of application: **01.07.2020**
(21) Application number: 18847433.2
(22) Date of filing: 09.08.2018
(51) Int. Cl.: A47G 19/22, A47G 19/00, A47G 19/12, B65D 1/00, C03C 3/083, C03C 3/085, C03C 3/087, C03C 3/095

(54) **METHOD FOR CONTROLLING EVAPORATION OF LIQUID CONSTITUENTS CONTAINED IN CONTAINER, AND GLASS ARTICLE**

(30) Priority: 22.08.2017 JP 2017159349
(71) Applicant: Okada, Masuo, Sendai-shi, Miyagi 982-0807 (JP)
(72) Inventor: Okada, Masuo, Sendai-shi, Miyagi 982-0807 (JP)
(74) Representative: Plougmann Vingtoft a/s
(86) International application number: PCT/JP2018/029935
(87) International publication number: WO 2019/039303

(57) **Abstract**

The present invention provides the method for controlling the evaporation of the liquid ingredients contained in the container by changing the composition of the glassware and glassware. Containing of the oxides effective for far-infrared radiation as the constituents in the glassware composed mainly by silica in following by contacting the liquids ingredients contained in the container with their glassware, controls the evaporation of liquids ingredients. The 5-40mass% of the oxides effective for far-infrared radiation such as transparent oxides such as titanium oxide, zinc oxide, etc., or the 1-10mass% of oxides of either transition metal oxides such as iron oxide, cobalt oxide, etc. or rare earth oxides such as neodymium oxide, cerium oxide, etc. for coloring, may be contained in said glassware.

## Description

### Technical Field

Present inventions relates to controlling of a liquid ingredient contained in a container and an effective glassware, where using of a glassware with containing the oxides effective for far-infrared emission such as transparent oxides, colored transition oxides absorbing a visible light or rare-earth oxides for coloring in the glassware composed of mainly silica, controls an evaporation of beverages, and the ingredients of liquid seasonings such as soy-source etc. in the container.

### Background Art

It is regarded as that the taste of Japanese-sake or wines will be changed by shapes or raw materials of containers. For examples, the drinking containers made by glasses, potteries, woods, or metals, bring their own tastes. A wine has the characteristics to change a flavor and a taste when the wine exposes to an oxygen, so that it is considered that the taste and flavor of the wine differ in depending on what shape of the wine glass is used in resulting from the change of exposing it to an oxygen. For examples, it is regarded that the flavor of the wine contained in the narrow mouth diameter of the wine glass brings to slow feeling of flavor, and that wide mouth diameter of the wine glass does to fast feelings of the rich aroma. Thus, for taking wine glasses as an example, it has conventionally been said that the size, thickness, shape, etc. of the glass can change the aroma and flavor of wine. In Japanese sake, a small mouth diameter of the glass gives a clear impression, while a large one makes it feel rich.

On the other hand, the quality of the drinks etc. is reported to be improved by glass compositions. For an example, The glass composition of 70-88 weight percent (hereafter abbreviated as wt%) of soda glass with 12-30 wt% of far-infrared radiation ceramics ,the example of which consists of 49.0wt%SiO₂, 36.5%Al₂O₃, 13.5%MgO, Fe₂O₃ with below 0.2%, TiO₂ with below 0.2%, CaO with below 0.5%, Na₂O with below 0.6 %, decreases the line width of nuclear magnetic resonance (NMR)spectrum of a water in the cups, with increasing with the amount of far-infrared radiation ceramics, and then it is said that molecular motions of the water become active (for example, see Patent Literature 1).

At that time, scientific analysis of the far-infrared ray effects of the structure of a water were done by the NMR spectrum, and it was reported that the smoothness of the water contacted with the infrared emissive ceramics was due to subdividing the cluster of a water (for example, see Non-patent Literatures 1-3). But it was clarified that the measurement of this line width of 17O-NMR is expressing the variations of PH around PH7 (for example, see Non-patent Literatures 4 or 5). Then, it is still uncertain how the water is influenced by far-infrared ray.

### Citation List

Patent Literature 1: JP H06-100332 A

Non-patent Literature 1: Kazuhiro Matsushita, Food analysis by NMR - Capturing the differences of the taste in molecular level, Chemistry today, pp62-67, (1989)
Non-patent Literature 2: Kazuhiro Matsushita, Evaluation of water state and elucidation of taste and maturity level, Food processing and ingredients, vol.24, pp82-85 (1989).
Non-patent Literature 3: NMR group in analytical instruments division of JEOL, Relations between taste of water and width of 17Onmr signals, JEOL NEWS, vol.31, pp14-16 (1990).
Non-patent Literature 4: Hisashi Kamitaira, Molecular engineering of water, Kodansha, (1998).
Non-patent Literature 5: Yoko Amo, Water-Dealer-Watching, Bussei Kenkyu, Vol. 75, No.5, pp644-683, (2001)

### Summary of Invention

### Technical Problem

Although various sensory analyses were done to the glassware for wine and Japanese-sake how their aromas will be changed with varying the thickness and the shapes of the glass containers, the scientific analyses of how their aromas changes over time etc. are still insufficient. The NMR verification for the effects of far-infrared radiation ceramics described in the Patent Literature 1, is also insufficient.

Thus, the purpose of the present invention is to clarify the effects of the compositions of the glassware on the evaporation of the liquid ingredients such as beverages contained in the container, and then is to provide the controlling method for evaporation of the liquid ingredients of contained in containers which enable to control the evaporation of the liquid ingredients, by varying the compositions of the glassware, and is to provide the glassware.

### Solution to Problem

The present inventor tried the various studies to achieve the above objectives, and focused on the oxides regarded as effective for far-infrared radiation such as transparent oxides same as silica such as titanium oxide, zinc oxide, aluminum oxide, zirconium oxide, tin oxide, antimony oxide, etc. and colored transition metal oxides of absorbing a visible light such as iron oxide, cobalt oxide, copper oxide, nickel oxide, manganese oxide, chromium oxide, etc., and then founds that the glass composed of mainly silica with varying the adding content of those oxides enables to control the evaporation of the liquid ingredients such as Japanese-sake etc., and thus reaches the present invention. Furthermore, it was also found that the evaporation of the aroma ingredients of Japanese-sake was promoted by increasing the adding amount of the oxides with far-infrared ray effects to the glass composed of mainly silica.

Namely, the presently invented method for controlling the evaporation of the liquid ingredients of contained in a container, is characterized in that the containing of the oxides effective for far-infrared radiation in the glassware composed of mainly silica as its constituents by contacting said glassware with the liquid ingredients contained in the container, enables to control said liquids ingredients.

The method to control the evaporation of ingredients of liquids contained in the presently invented container is such that 5-40mass% of the oxides such as at least one kind of titanium oxide, zinc oxide, aluminum oxide, zirconium oxide, tin oxide and antimony oxide as said oxides effective for far-infrared radiation, may be contained in said glassware, or 1-10mass% of oxides such as at least one kind of iron oxide, cobalt oxide, copper oxide, nickel oxide, manganese oxide and chromium oxide may be contained in said glassware. Furthermore, 1-10mass% of oxides such as at least one kind of neodymium oxide, cerium oxide and samarium oxide for coloring, may be contained in said glassware. Also 5-40mass% of the transparent oxides as a main additive as said oxides with far-infrared ray effects, may be contained in said glassware, and furthermore, 1-10mass% of at least one kind of transition-metal oxides absorbing the visible light for coloring and rare-earth oxides for coloring may be contained in said glassware.

The method to control the evaporation of the liquid ingredients contained in the presently invented container may stepwisely control the amount of evaporation of the liquid ingredients of contained in multiple containers by preparing the multiple glasswares composed of stepwisely varying the adding amount of said oxides with far-infrared ray effects.

The glassware according to the present invention is a glassware used for controlling the evaporation of the liquid ingredients contained in the present invented container, and is characterized in that it is constructed to contact with or to contain the foods and drinks. The glassware according to the present invention is, for examples, a glass-made container and the one what can be immersed in liquids such as muddlers.

### Advantageous Effects of Invention

According to the present invention, it becomes to possible that the evaporation of the liquid ingredients such as Japanese-sake contained in the container can be controllable with varying the compositions of glassware composed of mainly silica as its constituents by adding the transparent oxides of far-infrared ray effects such as titanium oxide, zinc oxide, aluminum oxide, etc.. This also enables to provide the method to control the evaporation of the liquid ingredients contained in the container and the glassware.

### Brief Description of Drawings

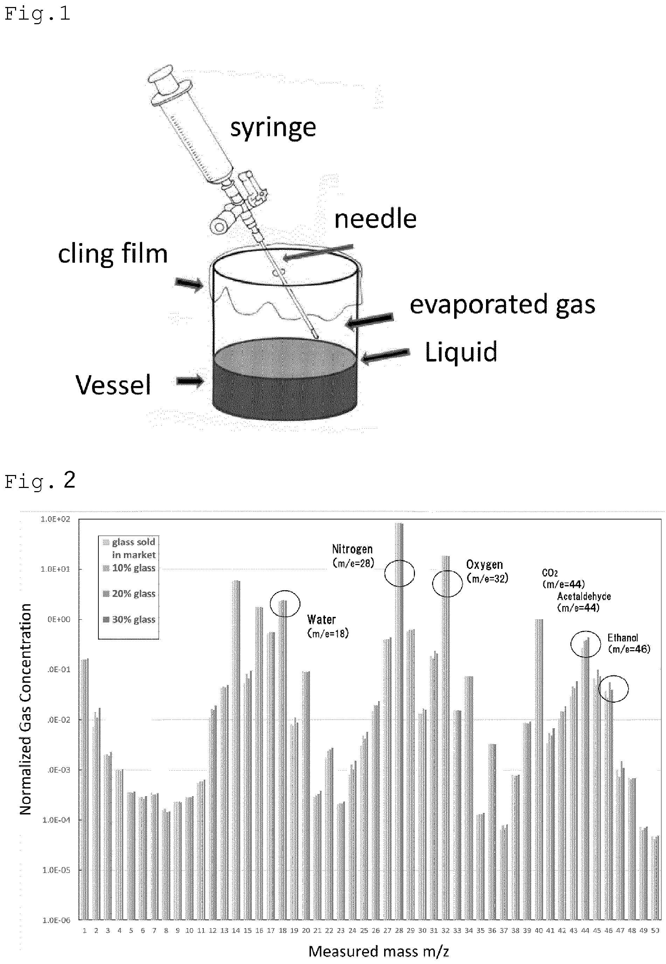

FIG. 1 is a perspective view which shows the gas sampling method from the sample contained in the container for measuring the evaporation, in describing a method for controlling the evaporation of liquid ingredients contained in a container according to an embodiment of the present invention.
FIG. 2 is a graph which shows the total weight of gas shown as ion current/ argon current with a molecular weight of 1-50 evaporated from the Japanese-sake contained in the glass sold in market and glasses with additives of oxides of 10mass%, 20mass% and 30mass% which names as 10%glass, 20%glass, and 30%glass, respectively, according to an embodiment of the present invention.

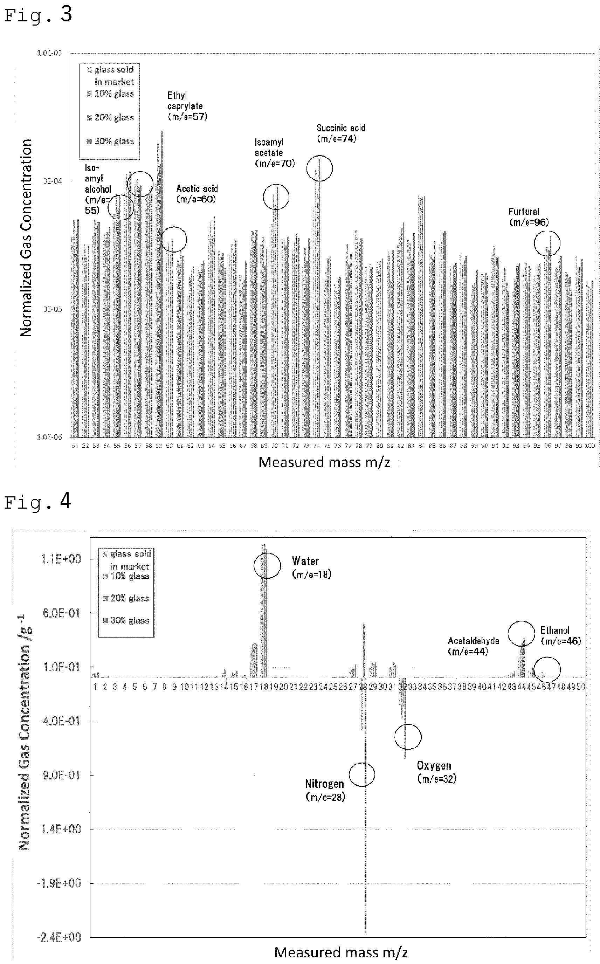

FIG. 3 is a graph which shows the total weight of gas shown as ion current/ argon current with a molecular mass of 50-100 evaporated from the Japanese-sake contained in the glass sold in market and glasses without or with additives of oxides of 10mass%, 20mass% and 30mass% which names as 10%glass, 20%glass, and 30%glass, respectively, according to an embodiment of the present invention.
FIG. 4 is a graph which shows the normalized gas concentration per gram of poured Japanese-sake in the container versus the molecular mass of 1-50, after subtracting the constituents of air from the total gas concentration shown in FIG. 2.

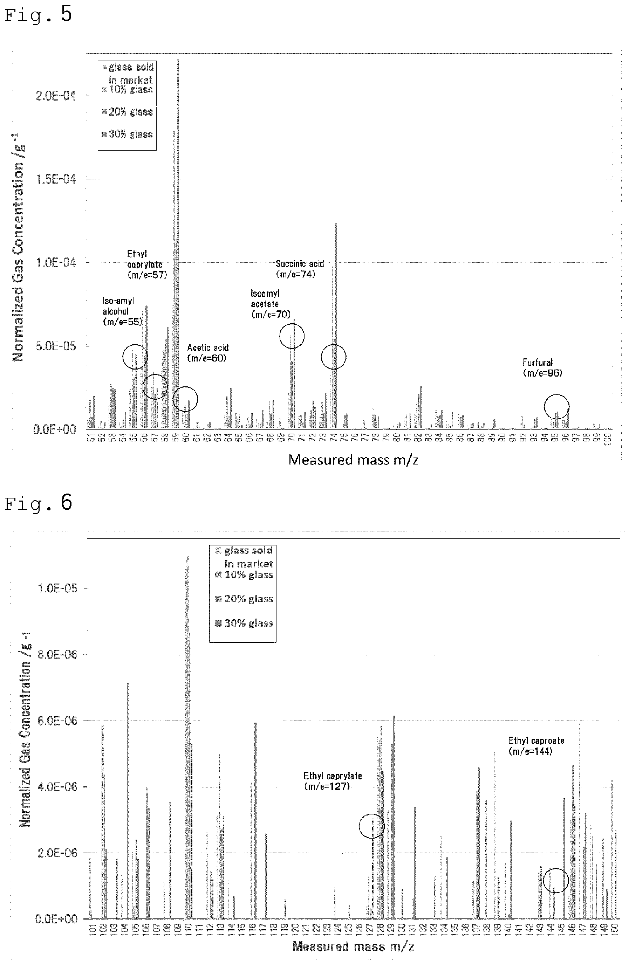

FIG. 5 is a graph which shows the normalized gas concentration per gram of poured Japanese-sake in the container versus the molecular mass of 51-100, after subtracting the constituents of air from the total gas concentration shown in FIG. 3.
FIG. 6 is a graph which shows the normalized gas concentration per gram of poured Japanese-sake in the container versus the molecular mass of 101-150, after subtracting the constituents of air from the total gas concentration obtained like FIG. 2, and FIG. 3.

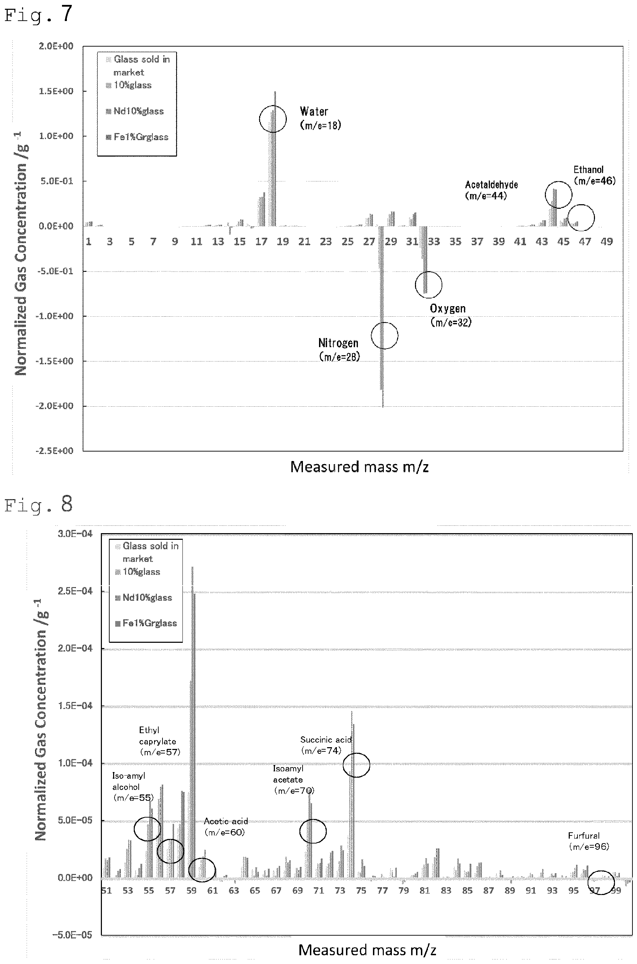

FIG. 7 is a graph which shows the normalized gas concentration per gram of the poured Japanese-sake in the glass, after subtracting the amount of air from the total weight of gas having a molecular weight of 1-50 evaporated from the Japanese-sake contained in the glass sold in market and glasses with additives of oxides such as 10mass%, 10mass%+1mass% of neodymium oxide, 1% of iron oxides, which names as 10%glass, Nd10%glass, and Fe1%Grglass, respectively, according to an embodiment of the present invention.
FIG. 8 is a graph which shows the normalized gas concentration per gram of the poured Japanese-sake in the glass, after subtracting the amount of air from the total weight of gas having a molecular weight of 51-100 evaporated from the Japanese-sake contained in the glass sold in market and glasses with additives of oxides such as 10mass%, 10mass%+1mass% of neodymium oxide, 1% of iron oxides, which names as 10%glass, Nd10%glass, and Fe1%Grglass, respectively, according to an embodiment of the present invention.

### Description of Embodiments

Hereinafter, embodiments of the present invention will be described based on examples and the like. A method for controlling evaporation of liquid ingredients contained in the embodiment container is containing the oxides of far-infrared ray effects as its constituents in the glassware composed of mainly silica, in resulting in controlling the evaporation of liquid ingredients in the container.

Although the attempts to change the flavor of drinks by changing the shape of the container such as wine-glass or sake-vessels among the soda-glass containers widely sold in market are reported, there are no attempts to control the evaporation of liquid ingredients by containing more than 5 mass% of the oxides with far-infrared ray effects in a soda-glass.
This glassware consists of an amorphous structure when the content of oxides with far-infrared effects is small, but it forms a mixed microstructure consisted of two or more phases including a crystal phase when the content of oxides is large.

As the oxides with far-infrared ray effects, titanium oxide, zinc oxide, aluminum oxide, zirconium oxide, tin oxide, antimony oxide, etc. are desirable as a transparent oxide which presents white in the case of fine powder in order to maintain the transparency that is the characteristic of a glass.

As the oxides with far-infrared ray effects, the transition metal oxides such as iron oxide, cobalt oxide, copper oxide, nickel oxide, manganese oxide, chromium oxide, etc., are desirable for coloring a glass.

As the oxides with far-infrared ray effects, transparent oxides such as titanium oxide, zinc oxide, aluminum oxide, zirconium oxide, tin oxide, antimony oxide, etc. are desirable to be mainly used for maintaining their transparency, and the transition metal oxides such as iron oxide, cobalt oxide, copper oxide, nickel oxide, manganese oxide, chromium oxide, etc. and rare earth oxides such as neodymium oxide, cerium oxide, samarium oxide, etc., are desirably included in the glass for coloring.

As described in Patent Literature 1, it is reported that the line width of NMR spectrum of a water in the cups decreases with increasing with the adding amount of far-infrared radiation ceramics, by adding the specific composition of oxides to soda-glass, and then molecular motions of the water becomes active. But there is no disclosure of a specific example of a method of stepwisely controlling the evaporation of the liquid ingredients contained in the container, by containing the oxides of far-infrared ray effects in soda-glass and with increasing the adding amount of oxides

As the method to control the evaporation of liquids ingredients contained in the container by including the oxides of far-infrared ray effect in soda-glass, when the amount of far-infrared radiation oxides becomes large, for example, beverages such as wine and Japanese-sake may lose their flavor, so that the appropriate content of about 1-40% of content of the oxides is desirable.

In order to promote the evaporation of liquid ingredients contained in the container, increment of the content of far-infrared radiation oxides in the glassware is preferable. For an example, the increment of the content of titanium oxide, zinc oxide, aluminum oxide, zirconium oxide, tin oxide, antimony oxide, etc. causes the increment of melting point and viscosity of the glass, so that it becomes to be difficult to form an amorphous structure that is a glass structure. This recommends that the method for producing a transparent glass is preferably the rapid-quenching method such as a spin method.

On the other hand, even though the slow cooling such as air blowing may cause glass devitrification, it causes no significant effects on the evaporation control of the contained liquid ingredients. Then the slow cooling is desirable instead of rapid-cooling, as the manufacturing method to improve the beauty and design which appear on devitrification, as far as the glass has no crack or becomes brittle.

### Example 1

The experiments to measure the evaporation of liquid ingredients contained in the glass-made container were performed by selecting TiO₂ and ZnO for an example as transparent oxides with far-infrared effects in order to study their adding effects. The compositions of the studied glass are based on the soda-glass cup of one hundred yen cup sold in markets and are shown in Table 1. The samples used in this investigation were the soda-glass with the composite additives about one to one composition of transparent oxides such as TiO₂ and ZnO which vary from 10 to 30 mass%, which are named as 10%glass, 20%glass, or 30%glass, respectively.

**Table 1**

| Compounds | SiO₂ | Na₂O | CaO | SrO | Al₂O₃ | MgO | Total% |
|---|---|---|---|---|---|---|---|
| mass% | 64 | 18.2 | 11 | 4.3 | 1.9 | 0.5 | 100.0 |

The evaporated gas from the liquids was measured by the high sensitivity gas analyzer for the breath gas analyzer manufactured by Nikken Flux Inc.. The measurement procedure is shown in FIG. 1. The Japanese sake named Bodaimoto junmaishu which is sake made without added alcohol or sugar with 7 to 13 gram was poured into the sample container,and the container were wrapped by the cling film in following by leaving it for 5 minutes. Then, the syringe needle inserts into the cling film, and the evaporated gas from poured Japanese-sake is extracted to the syringe, which was connected with the gas analyzer, in following by analyzing the ingredients of evaporated gas. For the gas analyzer, the standardization of the evaporated gas was based on the amount of an argon gas of 9,300ppm in the air. Then, the analysis of the air is always required to make the standardization. The evaporated gas of aromas from Japanese-sake was standardized by the weight of Japanese-sake.

FIGs. 2 and 3 show the total weight of gas which is shown as ion current/ argon current versus the molecular mass evaporated from the Japanese-sake in the glass container, after the Japanese-sake poured into the container which was wrapping by the cling film and leaving it for 5 minutes, and the syringe needle inserts into the cling film, and the evaporated gas from poured Japanese-sake is extracted to the syringe. The measurement temperature was 23°C. FIGs. 4 to 6 show the normalized gas concentration per gram of poured Japanese-sake in the container versus the molecular mass, after subtracting the constituents of air from the total gas concentration shown in FIGs. 2 and 3.

FIG. 2 exhibits the peaks from a water (molecular mass 18), nitrogen (28), oxygen (32), acetaldehyde (or CO₂) (44), ethanol (46). In FIG. 3 iso-amyl alcohol (55), ethyl caproate (57), acetic acid (60), isoamyl acetate (70), succinic acid (74), furfural (96) were observed.

The works concerning the analysis of the ingredients of Japanese-sake reported (for examples, Haruo Ogawa, Tomokazu Nakajima, Nobutoshi Yoshihara, Yukako Ohhashi, ┌Chemical analyses of ingredients in various types of alcoholic drinks of "Sake"┘, Bulletin of Tokyo Gakugei University. Natural Sciences, pp23-31, (2010).National research institute of brewing, ┌Smell and its origin of Sake┘, [Translated from Japanese.], (2010), Atsuko Isoya, ┌Aroma compounds during aging of Sake, Biotechnology ┘, pp720-723 , (2011).) that the aromas are known as acetaldehyde (wood-like smell), ethanol (alcoholic smell), iso-amyl alcohol (whiskey-like smell), ethyl caprylate (pear-like smell (bitterness)), acetic acid, isoamyl acetate (banana-like smell, and Ginjo-ka (fruit, flower,floral, blossom-like smell)), succinic acid (tasty (umami)), furfural (Ginjo-ka which is contained in Daiginjo-shu made from highly-polished rice), ethyl caproate (apple-like smell (tart) and Ginjo-ka).

FIG. 4 exhibits that the water, acetaldehyde, ethanol are positive value, and that the nitrogen except of 20%glass, and oxygen are negative value, in the aroma gas after subtracting the components of air. These negative values mean that the contents of the nitrogen and the oxygen in the air are larger than those contained in the glass with Japanese-sake. The peak of molecular mass of 44 may correspond to CO₂ or acetaldehyde, but it turns out that the peak will be acetaldehyde from the sake since the peak becomes positive value.

The difference due to the glass compositions in the aroma ingredients evaporated from the container turns out that the amount of the acetaldehyde evaporated from the sake in the container with the composite additives of TiO₂ and ZnO, is larger than one without additives.

FIG. 5 also exhibits that the iso-amyl alcohol, the isoamyl acetate, and the succinic acid which were known as characteristic aromas of Japanese-sake have the concentrations of around 1.0×10⁻⁶ -6.8×10⁻⁶. Since the concentration of these aromas from the glass container with the additives is larger than that from the one without additives, it can be said that the additives of the infrared emissive ceramics such as the transition metal oxides to the soda-glass will be effective on accelerating the evaporation of the aroma of Japanese-sake.

There will be the tendency that the evaporation of the aromas will be accelerated with increasing the amount of additives in the glass container although the amounts of evaporated aromas vary in depending on the molecular mass. In FIG. 6, the evaporated gas concentration of high molecular mass tends to decrease with increasing molecular mass in comparing with ones of low molecular mass, so that it will be difficult to judge the effects of the additives in the container to the evaporation of the aromas. But the evaporated amounts of the ethyl caprylate of molecular mass of 144 except of 57 and of 127 and the ethyl caproate of molecular mass of 172.6, which are the characteristic aromas of Japanese-sake, increase with increasing the additives in the glass container. It can be judged that the evaporation of the aromas of the Japanese-sake will be accelerated with increasing the amount of additives of the infrared emissive ceramics in the glass container.

### Example 2

The experiments to measure the evaporation of liquids ingredients contained in the glass-made container are performed by selecting neodymium oxide as an example of rare earth oxides for coloring, and iron oxide of transition metal oxides with far-infrared effects as well, in order to study their adding effects. The samples used in this investigation are the 10% added glass as shown in the embodiment of the invention 1 with 1 mass % of the neodymium oxide, which colors the glass blue-purple, and the soda-glass as shown in Table 1 with the additives of 1 mass% of an iron oxide, which exhibits green colored glass. The glass samples with the composite additives of 10% of TiO₂ and ZnO with 1mass% neodymium oxide, and 1mass% iron oxide are named as Nd10%glass, Fe1%Grglass, respectively.

FIGs. 7 and 8 show the normalized gas concentration per gram of poured Japanese-sake in the container versus the molecular mass of 1-50 and 51-100, after subtracting the constituents of air from the total gas concentration as shown in FIGs. 4 and 5, respectively. The minus peaks of the nitrogen and the oxygen are interpreted as same as FIG. 4, and FIGs 7 and 8 show the data of the glass sold in market and the 10% glass by comparison.

In FIG. 7, the amount of the acetaldehyde evaporated from the sake in the container of Nd10%glass and Fe1%Grglass which contains coloring oxides, is larger than that from the container of 10%glass and the glass sold in market.

In FIG. 8, the iso-amyl alcohol, the isoamyl acetate, and the succinic acid which were known as characteristic aromas of Japanese-sake are also observed, and it was found that their amount from the container of Nd10%glass and Fe1%Grglass with containing coloring oxides, is larger than that from the container of 10%glass and the glass sold in market.
The effect of neodymium oxide as the far-infrared radiation has been unknown, but the present embodiment clarifies that neodymium oxide has the effect to promote the evaporation of Japanese-sake ingredients. This indicates that the neodymium oxide for coloring and the iron oxide for far-infrared effects have the effects to promote the evaporation of Japanese-sake ingredients.

Although it has been said that the taste and the flavor of the drinks will be changed by the shape of the glass-made container, the present embodiment clarifies that the glasses with the titanium dioxide, zinc oxide, alumina as the oxides of far-infrared radiation, and one with the neodymium oxide for coloring and the iron oxide for far-infrared effects, have the remarkable effects to promote the evaporation of aroma ingredients of the Japanese-sake, in comparison with the soda-glass sold in market. This leads to expect that it may be possible to change the tastes and flavors of other drinks such as wines, Japanese-vodkas, coffees, soft-drinks, vinegars, soy sauces.

Moreover, muddlers and ohajikis of Japanese glass-made tiddlywink, made with the composition shown in the embodiment of the invention 1 as the glassware, are dipped in the wine and Japanese-sake contained in the container of soda-glass and the ceramic ware sold in market, are confirmed to change their drinks such that their aroma becomes to be vivid or mellow as well as the glassware shown in the first embodiment of the invention. Therefore, it is judged that the glassware of the embodiment of the invention is not only effective to the glass-made container but also to other glassware.

### Industrial Applicability

The present embodiment suggests that the evaporation of the liquid ingredients contained in the container can be stepwisely controlled, so that their industrial applications could be tremendous. This can be applicable to stepwisely change the tastes and flavors of the drinks such as wines, Japanese-vodkas, coffees, soft-drinks, vinegars, soy sauces as well as Japanese-sake described in the present embodiment of the invention. For an example, the sommelier who was asked to use the present invented glass-made container gives the comment that the wine with the strong acidity and astringency become to have the vivid aroma in resulting in the weak acidity and astringency, and as a result that the wine changes to be mellow. It is also confirmed that the taste of soy sauces in the present invented glass-made dishes change to be smooth, thus the present container are also applicable to the seasoning one. The present invented containers will become to be suitable as the coffee-cup with abundant flavor of coffee, and as the one that gives the week feeling of sourness of the vinegar for drinking.

It will become to be a suitable use for the perfume bottles and aroma diffusers since the present embodiment glassware can stepwisely control the evaporation of their ingredients in resulting in giving their strong fragrances. Especially in case of blending the various fragrances of perfumes, the glassware related to the present embodiment can control the evaporation of ingredients of perfumes, so that in may be possible what kind of the glass composition enables which ingredients of perfume to evaporate effectively, etc., and then the future applications of the present invented container are strongly expected.

## Claims

1. A method for controlling the evaporation of a liquid ingredient contained in a container is characterized such that containing of the oxides effective for far-infrared radiation in the glassware composed of mainly silica as its constituents by contacting said glassware with the liquid ingredient contained in the container, enables to control said liquid ingredient.

2. The method for controlling the evaporation of a liquid ingredient contained in a container according to claim 1, wherein 5-40mass% of the oxides such as at least one kind of titanium oxide, zinc oxide, aluminum oxide, zirconium oxide, tin oxide or antimony oxide as said oxides effective for far-infrared radiation, are contained in said glassware.

3. The method for controlling the evaporation of a liquid ingredient contained in a container according to claim 1 or 2, wherein 1-10mass% of the oxides such as at least one kind of iron oxide, cobalt oxide, copper oxide, nickel oxide, manganese oxide or chromium oxide, as said oxides effective for far-infrared radiation, are contained in said glassware.

4. The method for controlling the evaporation of a liquid ingredient contained in a container according to any one of the claims 1-3, wherein 1-10mass% of the oxides such as at least one kind of neodymium oxide, cerium oxide or samarium oxide for coloring, are contained in said glassware.

5. The method for controlling the evaporation of a liquid ingredient contained in a container according to claim 1, wherein 5 -40mass% of the transparent oxides as said effective for far-infrared radiation with the main composition, and 1-10mass% of at least one kind of colored transition metal oxide absorbing the visible light or rare-earth oxides for coloring are contained in said glassware.

6. The method for controlling the evaporation of a liquid ingredient contained in a container according to any one of claims 1-5, wherein by preparing multiple glasswares with stepwisely changing the amount of addition of oxides effective for far-infrared radiation, the amount of the evaporation of liquid ingredients contained in the multiple glasswares can be stepwisely controlled.

7. A glassware of controlling the evaporation of a liquid ingredient contained in a container according to any of claims 1-6, wherein the glassware is constituted so that food and drink are stored or in contact with food and drink.
